(19) Europäisches Patentamt
European Patent Office
Office européen des brevets

(11) **EP 3 435 317 A1**

(12) **EUROPEAN PATENT APPLICATION**
published in accordance with Art. 153(4) EPC

(43) Date of publication:
**30.01.2019 Bulletin 2019/05**

(21) Application number: **16895320.6**

(22) Date of filing: **12.09.2016**

(51) Int Cl.:
***G06Q 30/06*** *(2012.01)* ***G06Q 10/06*** *(2012.01)*

(86) International application number:
**PCT/JP2016/004132**

(87) International publication number:
**WO 2017/163280 (28.09.2017 Gazette 2017/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **25.03.2016 JP 2016062034**

(71) Applicant: **Panasonic Intellectual Property Management Co., Ltd.**
**Osaka-shi, Osaka 540-6207 (JP)**

(72) Inventor: **OKIMOTO, Yoshiyuki**
**Osaka-shi,**
**Osaka 540-6207 (JP)**

(74) Representative: **Vigand, Philippe et al**
**Novagraaf International SA**
**Chemin de l'Echo 3**
**1213 Onex - Genève (CH)**

(54) **OPERATING UNIT NUMBER DETERMINATION DEVICE, OPERATING UNIT NUMBER DETERMINING SYSTEM, OPERATING UNIT NUMBER DETERMINATION METHOD, AND PROGRAM**

(57) An obtaining unit obtains store-visitor number information indicating a store-visitor number, which is a number of customers who visited a store, waiting customer number information indicating a waiting customer number, which is a number of customers waiting to be processed at a plurality of cash registers installed in the store, and influx number information indicating an influx number, which is a number of customers added to the waiting customer number. An influx number prediction unit calculates a predicted influx number, which is a number of customers who are expected to be added to the waiting customer number at the plurality of cash registers after a predetermined time from a current time point, based on the store-visitor number information and the influx number information. A storage unit stores processing capability information indicating a processable quantity that can be processed by each of the plurality of cash registers per a certain time and cost information about an operating cost of each of the plurality of cash registers. A congestion degree prediction unit calculates a plurality of values of a predicted waiting customer number, which is a number of customers who are expected to wait to be processed at the plurality of cash registers after the predetermined time, based on the waiting customer number information, the predicted influx number, and the processing capability information, where each of the plurality of values corresponds to each of a plurality of operating unit numbers of the plurality of cash registers. An operating unit number determination unit calculates an operating unit number of the plurality of cash registers based on the predicted waiting customer number and the cost information.

FIG. 1

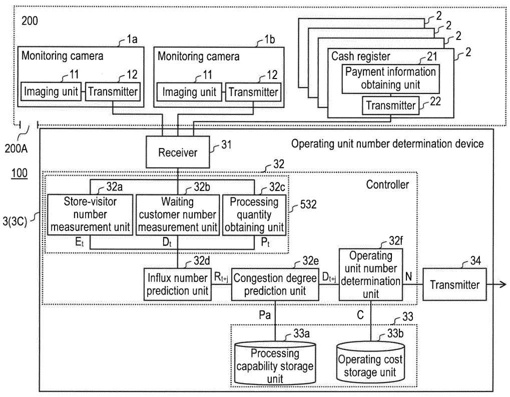


EP 3 435 317 A1

## Description

TECHNICAL FIELD

The present disclosure relates to an operating unit number determination device that determines an operation unit number of cash registers, an operating unit number determining system including the operating unit number determination device, an operating unit number determination method, and a program.

BACKGROUND ART

PTL 1 discloses a system in which a number of customers in a predetermined region is measured to predict a number of staff members demanded at checkouts after a predetermined time for the purpose of deploying staff members to the checkouts. This makes it possible to efficiently deploy the staff members, thus improving store productivity and customer satisfaction.

Citation List

Patent Literature

PTL 1: Japanese Patent Unexamined Publication (Translation of PCT Application) No. 2008-544379

SUMMARY OF THE INVENTION

An obtaining unit obtains store-visitor number information indicating a store-visitor number, which is a number of customers who visited a store, waiting customer number information indicating a waiting customer number, which is a number of customers waiting to be processed at a plurality of cash registers installed in the store, and influx number information indicating an influx number, which is a number of customers added to the waiting customer number. An influx number prediction unit calculates a predicted influx number, which is a number of customers who are expected to be added to the waiting customer number at the plurality of cash registers after a predetermined time from a current time point, based on the store-visitor number information and the influx number information. A storage unit stores processing capability information indicating a processable quantity that can be processed by each of the plurality of cash registers per a certain time and cost information about an operating cost of each of the plurality of cash registers. A congestion degree prediction unit calculates a plurality of values of a predicted waiting customer number, which is a number of customers who are expected to wait to be processed at the plurality of cash registers after the predetermined time, based on the waiting customer number information, the predicted influx number, and the processing capability information, where each of the plurality of values corresponds to each of a plurality of operating unit numbers of the plurality of cash registers. An operating unit number determination unit calculates an operating unit number of the plurality of cash registers based on the predicted waiting customer number and the cost information.

BRIEF DESCRIPTION OF DRAWINGS

FIG. 1 is a block diagram of a cash register operating unit number determining system according to an exemplary embodiment.
FIG. 2 is a flowchart for describing an operation of the cash register operating unit number determining system according to the exemplary embodiment.
FIG. 3 is a diagram for describing prediction of an influx number into cash registers in the operating unit number determining system according to the exemplary embodiment.
FIG. 4 is a table for describing prediction of a degree of congestion in the operating unit number determining system according to the exemplary embodiment.
FIG. 5 is a diagram for describing a comparison between an average wait and an operating cost in the operating unit number determining system according to the exemplary embodiment.
FIG. 6 is a table for describing selection of an operating unit number of cash registers in the operating unit number determining system according to the exemplary embodiment.

DESCRIPTION OF EMBODIMENT

Hereinafter, an exemplary embodiment will be described in detail with reference to the drawings as appropriate. However, detailed description beyond necessity may be omitted. For example, detailed description of a matter that has been already known well or overlapping description of substantially the same configuration may be omitted. Such omissions are aimed to prevent the following description from being redundant more than necessary, and to help those skilled in the art easily understand the following description. It should be noted that the attached drawings and the following description of the exemplary embodiment are provided for those skilled in the art to fully understand the present disclosure, and the attached drawings and the following description are not intended to limit the subject matter as described in the appended claims.

(Exemplary embodiment)

An operating unit number determination device and an operating unit number determining system including the operating unit number determination device according to the exemplary embodiment determine an operating unit number of cash registers optimal for relieving congestion of the cash registers while keeping a small operating unit number of the cash registers.

[1. Configuration]

FIG. 1 is a block diagram of operating unit number determining system 100 according to the exemplary embodiment. Operating unit number determining system 100 includes monitoring cameras 1a, 1b installed in store 200, a plurality of cash registers 2 installed in store 200, and operating unit number determination device 3. In the exemplary embodiment, cash register 2 is a POS (Point of Sales) cash register. Operating unit number n of cash registers 2 is a number of operating cash registers 2 among cash registers 2 in store 200. Operating unit number determination device 3 determines optimum operating unit number N of cash registers 2 based on images in store 200 captured by monitoring cameras 1a, 1b and a processing quantity of cash register 2 obtained from cash register 2.

Each of monitoring cameras 1a, 1b includes imaging unit 11 that captures an image and transmitter 12 that transmits the image captured by imaging unit 11. It is possible to achieve imaging unit 11 by a CCD image sensor, a CMOS image sensor, or an NMOS image sensor. Transmitter 12 includes an interface circuit for communicating with external devices based on a predetermined communication standard (for example, LAN or WiFi). Monitoring camera 1a is installed at a position where the image of entrance 200A of store 200 can be captured. Monitoring camera 1b is installed at a position where the image of cash registers 2 of store 200 can be captured.

Cash register 2 includes payment information obtaining unit 21 that obtains payment information and transmitter 22. The payment information indicates that payment for purchase of goods by a customer is completed. Transmitter 22 transmits operation information indicating whether cash register 2 is operating and the obtained payment information. Payment information obtaining unit 21 includes a barcode reader using a scanner, a CCD, a laser, or the like. Transmitter 22 includes an interface circuit for communicating with external devices based on a predetermined communication standard (for example, LAN or WiFi).

Operating unit number determination device 3 includes receiver 31, controller 32, and transmitter 34. Receiver 31 receives images in store 200 from monitoring cameras 1a, 1b and, payment information and operation information from each cash register 2. Controller 32 determines optimum operating unit number N of cash registers 2 based on the received images, the received payment information, and the received operation information. Transmitter 34 outputs operating unit number information indicating determined optimum operating unit number N of cash registers 2. Each of receiver 31 and transmitter 34 includes an interface circuit for communicating with external devices based on a predetermined communication standard (for example, LAN or WiFi).

Operating unit number determination device 3 further includes storage unit 33. Storage unit 33 includes processing capability storage unit 33a and operating cost storage unit 33b. Processing capability storage unit 33a stores processing capability information indicating processable quantity Pa. Operating cost storage unit 33b stores cost information indicating operating cost C of one cash register 2. Processable quantity Pa indicates a number of customers one cash register 2 can settle payment per unit time. Processing capability storage unit 33a and operating cost storage unit 33b can be achieved by a DRAM, a ferroelectric memory, a flash memory, or a magnetic disk, and may be the same or separate storage units.

Controller 32 can be achieved by a semiconductor element or the like. Functions of controller 32 may be configured only by hardware or may be achieved by combining hardware and software. Controller 32 may be configured by, for example, microcomputer, CPU, MPU, DSP, FPGA, or ASIC.

Controller 32 has obtaining unit 532 including store-visitor number measurement unit 32a, waiting customer number measurement unit 32b, and processing quantity obtaining unit 32c. Store-visitor number measurement unit 32a measures store-visitor number $E_t$, which is a number of customers who visited store 200, based on images captured by monitoring camera 1a installed to point at entrance 200A. Waiting customer number measurement unit 32b measures waiting customer number $D_t$, which is a number of customers waiting to be account-processed at cash registers 2, based on images captured by monitoring camera 1b installed to point at cash registers 2. Processing quantity obtaining unit 32c obtains processing quantity $P_t$, which is a number of customers processed by cash registers 2, based on the payment information and the operation information of cash registers 2.

Controller 32 further includes influx number prediction unit 32d, congestion degree prediction unit 32e, and operating unit number determination unit 32f. Influx number prediction unit 32d predicts influx number $R_{t+j}$ (predicted influx number) that indicates a number of customers who are expected to go to cash registers 2 and to be added to waiting customer number $D_t$, which is the number of customers waiting to be account-processed at cash registers 2, after predetermined time (j) from current time (t). Congestion degree prediction unit 32e predicts a degree of congestion, which is predicted waiting customer number $D_{t+j}$ after predetermined time (j), based on predicted influx number $R_{t+j}$ and processable quantity Pa. Operating unit number determination unit 32f determines optimum operating unit number N of cash registers 2 based on the predicted degree of congestion and operating cost C.

[2. Operation]

Operating unit number determination device 3 obtains in advance store-visitor number $E_t$ in the past based on images captured by monitoring camera 1a installed to point at entrance 200A, obtains waiting customer number $D_t$ in the past based on images captured by monitoring camera 1b installed to point at cash registers 2, and obtains processing quantity $P_t$ of cash registers 2 in the past based on payment information and operation information of cash registers 2, thus simulating the degree of congestion of cash registers 2. A method of determining optimum operating unit number N based on a simulation result is described below.

FIG. 2 shows a process of determining optimum operating unit number N, which is performed by controller 32. First, controller 32 obtains store-visitor number $E_t$, waiting customer number $D_t$, and processing quantity $P_t$ (step S201). Specifically, store-visitor number measurement unit 32a obtains store-visitor number Et during a predetermined time based on images captured by monitoring camera 1a installed to point at entrance 200A. Waiting customer number measurement unit 32b obtains waiting customer number $D_t$ during a predetermined time based on images captured by monitoring camera 1b installed to point at cash registers 2. Processing quantity obtaining unit 32c obtains processing quantity $P_t$ of cash registers 2 during a predetermined time based on the payment information and the operation information of cash registers 2.

Influx number prediction unit 32d refers to obtained store-visitor number $E_t$ to predict influx number $R_{t+j}$ after predetermined time (j) (step S202). FIG. 3 shows an example of calculating influx number (predicted influx number) $R_{t+5}$ after a predetermined time (j = 5 min.). Influx number $R_{t+5}$ is calculated based on store-visitor number $E_{t-i}$, which is the number of customers who visited a store i minutes prior to current time point (t), that is, 15 minutes to 5 minutes prior to current time point (t) and influx number $R_{t-i}$, which is the number of customers who went to cash registers 2 from a time i minutes before, that is, a time 10 minutes before until current time point (t). Influx number prediction unit 32d calculates influx number $R_{t+j}$ per unit time after current time point (t) by multiple regression prediction represented by following (Formula 1) that uses coefficients $W^1$, $W^2$, and $W^3$ for weighting, variable h at the current time point, and another variable C. Influx number $R_{t-i}$ before current time point (t) and influx number $R_{t+j}$ after current time point (t) are a total number of customers who reach all cash registers 2 per unit time.

[Formula 1]

$$R_{t+j} = \sum_{i=5}^{15} W_i^1 \cdot E_{t-i} + \sum_{i=0}^{10} W_i^2 \cdot R_{t-i} + W^3 \cdot h + C$$

Operating unit number determination device 3 obtains in advance store-visitor number $E_t$ in the past based on images captured by monitoring camera 1a installed to point at entrance 200A, obtains waiting customer number $D_t$ in the past based on images captured by monitoring camera 1b installed to point at cash registers 2, and obtains processing quantity $P_t$ of cash registers 2 in the past based on payment information and operation information of cash registers 2, thus simulating the degree of congestion of cash registers 2. Operating unit number determination device 3 thus determines coefficients $W^1$, $W^2$, and $W^3$, and variable h in above (Formula 1) for determining influx number $R_{t+j}$ by using past log data to minimize an error between a predicted value and an actually measured value. In addition, a user of operating unit number determination device 3 (for example, a store manager) determines in advance coefficients $\alpha$, $\beta$, and $\gamma$ for

determining optimum operating unit number N of cash registers 2 based on a simulation result of the degree of congestion of cash registers 2. Coefficients $W^1$, $W^2$ may change every unit time (for example, every one minute).

Influx number prediction unit 32d refers to waiting customer number $D_t$ and processing quantity $P_t$ to calculate influx number $R_{t-i}$ during a past predetermined time (i = 0 to 10) by following (Formula 2) using waiting customer number $D_{t-(i-1)}$ (i-1) minutes before, waiting customer number $D_{t-i}$ i minutes before, and number $P_{t-i}$ of customers whose payment has been completed at all operating cash registers 2 i minutes before.

[Formula 2]

$$R_{t-i} = D_{t-(i-1)} - D_{t-i} + P_{t-i}$$

Waiting customer number $D_t$ and processing quantity $P_t$ are a total number per a certain time when all cash registers 2 are targets, that is, per unit time. For processing quantity $P_t$, it is possible to use numerical values mechanically counted by using images captured by monitoring cameras installed on cash registers 2. When past influx number $R_{t-i}$ is directly measured based on images captured by monitoring cameras or the like, the influx number does not need to be calculated using (Formula 2).

In predicting influx number $R_{t+j}$ after predetermined time (j), a number of customers in a particular section in store 200, attributes of customers (a gender, an age, and group information (a family, a couple, and the like)), a day of the week, a holiday, a season, and information about events around store 200 may be used as variable C used for prediction. A prediction system is not limited to the multiple regression prediction, and a time series prediction model such as an ARIMA model and an ARCH model may be used. Additionally, prediction may be performed using a state space model such as a Kalman filter or a Particle filter. Deep learning may also be used.

Next, congestion degree prediction unit 32e predicts a value of waiting customer number $D_{t+j}$ predicted after a predetermined time (for example, after 0 minute to 5 minutes) for each of a plurality of operating unit numbers of operating cash registers 2 based on a simulation or the like (step S203). FIG. 4 shows a simulated prediction result of predicted waiting customer number $D_{t+j}$ based on waiting customer number $D_t = 5$, which is the total number of waiting customers at all cash registers 2 at present time point (t) obtained from waiting customer number measurement unit 32b, processable quantity Pa of one cash register 2 per a certain time, that is, per unit time obtained from processing capability storage unit 33a, and influx number Rt+j per unit time, which is the total number of predicted influx numbers at all cash registers 2 obtained from influx number prediction unit 32d. FIG. 4 shows the simulated prediction result of predicted waiting customer number $D_{t+j}$ when processable quantity Pa is 1 customer/min. number of cash registers and influx number $R_{t+j}$ is 3 customers/min. FIG. 4 exemplifies waiting customer number $D_{t+j}$ of one cash register 2. Processable quantity Pa is an average value of numbers of customers processed by one cash register 2 per unit time, which is determined by a distribution of a processing time of one cash register 2 in a day and a number of customers processed by one cash register 2 in a day. Predicted waiting customer number $Da_{t+j}$ at one cash register 2 after predetermined time (j min.) shown in FIG. 4 is calculated by following (Formula 3) using operating unit number n of cash registers 2.

[Formula 3]

$$D_{t+j} = \max\left(0, D_{t+j-1} + R_{t+j-1} - Pa \cdot n\right)$$

$$Da_{t+j} = \frac{D_{t+j}}{n}$$

Operating unit number determination unit 32f then determines optimum operating unit number N of cash registers 2 after the predetermined time (step S204) and outputs determined optimum operating unit number N from transmitter 34 (step S205). It is thus possible to inform a store manager of store 200 about optimum operating unit number N of cash registers 2.

In determining optimum operating unit number N at step S204, operating unit number determination unit 32f selects, as optimum operating unit number N, operating unit number n with minimum sum value S (penalty) represented by following (Formula 4) using change amount Δn of the operating unit number of cash registers 2.

[Formula 4]

$$S = \alpha \cdot D_{t+j} + \beta \cdot C + \gamma \cdot \Delta n$$

Coefficients $\alpha$, $\beta$, and $\gamma$ in (Formula 4) are determined in advance by a user of operating unit number determination device 3 (for example, a store manager of store 200) as a result of simulation analysis made in advance based on the past log data. The store manager of store 200 can refer to the simulation result to determine coefficients $\alpha$, $\beta$, and $\gamma$ according to a balance between an operating cost of cash register 2 and the degree of congestion of cash register 2. FIG. 5 shows a relationship between average wait length Pp, which is an average of numbers of waiting customers indicating the degree of congestion, and operating cost Cp depending on values of coefficients $\alpha$, $\beta$, and $\gamma$. Case (a) is a case where a reduction in an operating cost is prioritized over a reduction in a wait length, and $\alpha 1$, $\beta 1$, and $\gamma 1$ are used respectively for coefficients $\alpha$, $\beta$, and $\gamma$. Case (c) is a case where the reduction in the wait length (waiting customer number $D_{t+j}$) is prioritized over the reduction in the operating cost, and $\alpha 3$, $\beta 3$, and $\gamma 3$ are used respectively for coefficients $\alpha$, $\beta$, and $\gamma$. Case (b) is a case where a degree of priority of the degree of congestion and the operating cost is intermediate between case (a) and case (c), and $\alpha 2$, $\beta 2$, and $\gamma 2$ are used respectively for coefficients $\alpha$, $\beta$, and $\gamma$. As shown in FIG. 5, as the degree of congestion is reduced, the operating cost is increased. On the other hand, as the operating cost is reduced, the degree of congestion is increased. The store manager of store 200 can refer to the simulation result to select in advance values of coefficients $\alpha$, $\beta$, and $\gamma$ according to a balance between the length of a wait for cash register 2 and the operating cost.

FIG. 6 shows sum value S when two cash registers 2 are operated immediately before the current time point and a store manager sets in advance $\alpha = 8$, $\beta = 0.1$, and $\gamma = 4$ for coefficients $\alpha$, $\beta$ and $\gamma$. In this case, operating unit number determination unit 32f selects, as optimum operating unit number N after the current time point, the operating unit number "3" with minimum sum value S (penalty).

Optimum operating unit number N of cash registers 2 is determined as described above, and it is possible to inform the store manager of store 200 about optimum operating unit number N of cash registers 2. The store manager can thus change actual operating unit number n of cash registers 2 according to informed optimum operating unit number N.

[3. Effects and other benefits]

Operating unit number determination device 3 according to the exemplary embodiment includes store-visitor number measurement unit 32a, waiting customer number measurement unit 32b, influx number prediction unit 32d, processing capability storage unit 33a, operating cost storage unit 33b, congestion degree prediction unit 32e, operating unit number determination unit 32f, and transmitter 34. Store-visitor number measurement unit 32a obtains store-visitor number information indicating store-visitor number $E_t$, which is the number of customers who visited store 200. Waiting customer number measurement unit 32b obtains waiting customer number information indicating waiting customer number $D_t$, which is the number of customers waiting to be processed at cash registers 2. Influx number prediction unit 32d obtains influx number information indicating influx number $R_t$, which is the number of customers who reached cash registers 2 installed in store 200, and calculates influx number $R_{t+j}$, which is the number of customers who will reach cash registers 2 after a predetermined time, based on the store-visitor number information and the influx number information. Processing capability storage unit 33a stores processing capability information indicating processable quantity Pa, which is the processing quantity that can be processed by one cash register 2 per unit time. Operating cost storage unit 33b stores cost information about operating cost C of cash register 2. Congestion degree prediction unit 32e calculates the degree of congestion (predicted waiting customer number $D_{t+j}$), which is the number of customers who are expected to wait to be processed at cash registers 2 after a predetermined time, for each of the operating unit numbers of cash registers 2 based on the obtained waiting customer number information, the predicted influx number $R_{t+j}$ calculated, and the stored processing capability information. Operating unit number determination unit 32f calculates optimum operating unit number N of cash registers 2 based on the predicted waiting customer number calculated and the stored cost information. Transmitter 34 outputs operating unit number information indicating calculated optimum operating unit number N.

The system disclosed in PTL 1 does not reflect costs of a check-out operation such as labor costs. In general, as the number of checkouts is increased, the number of waits at the checkouts is reduced, but the costs of the check-out operation are increased.

As described above, operating unit number determination device 3 according to the exemplary embodiment predicts an influx number, which is the number of customers who will reach cash registers 2, based on a state of customers who visited store 200, thus relieving congestion of cash registers 2 while keeping a small operating unit number n of cash registers 2. As the congestion of cash registers 2 is relieved, it is possible to prevent a reduction in customer satisfaction. In addition, as a small operating unit number of cash registers 2 is kept, it is possible to prevent an increase in labor costs, which meets satisfaction of store 200.

Operating unit number determination unit 32f calculates optimum operating unit number N of cash registers 2 based on a difference ($\Delta$n) in an operating unit number of cash registers 2 between before and after a change. It is thus possible to prevent frequent variations in operating unit number n.

Processing quantity obtaining unit 32c further obtains processing quantity information indicating processing quantity $P_t$ from cash register 2. Influx number prediction unit 32d calculates influx number $R_t$ based on the waiting customer number information obtained from waiting customer number measurement unit 32b and the processing quantity information obtained from processing quantity obtaining unit 32c, thus obtaining influx number information. Consequently, if influx number $R_t$ cannot be directly measured, influx number $R_t$ can be obtained.

Store-visitor number measurement unit 32a measures store-visitor number $E_t$ based on images captured by monitoring camera 1a imaging entrance 200A of store 200. Waiting customer number measurement unit 32b measures waiting customer number $D_t$ based on images captured by monitoring camera 1b capturing cash registers 2. It is thus possible to calculate predicted influx number $R_{t+j}$ based on the measured store-visitor number Et and the measured waiting customer number $D_t$.

Influx number prediction unit 32d adds weight h at the current time point to store-visitor number $E_t$ and influx number $R_t$, thus calculating predicted influx number $R_{t+j}$. It is thus possible to minimize an error between a predicted value and an actually measured value.

Operating unit number determining system 100 according to the exemplary embodiment includes monitoring camera 1a that outputs images obtained by capturing entrance 200A of store 200, a plurality of cash registers 2 installed in store 200, monitoring camera 1b that outputs images obtained by capturing cash registers 2, and operating unit number determination device 3 that uses images obtained from monitoring camera 1a and monitoring camera 1b to calculate optimum operating unit number N of cash registers 2. It is thus possible to relieve congestion of cash registers 2 while keeping a small operating unit number n.

The operating unit number determination method according to the exemplary embodiment determines an operating unit number (optimum operating unit number N) of cash registers 2 by using computer 3C. Computer 3C obtains, at receiver 31, store-visitor number information indicating store-visitor number $E_t$, which is the number of customers who visited store 200, influx number information indicating influx number $R_t$, which is the number of customers who reached cash registers 2 installed in store 200, and waiting customer number information indicating waiting customer number $D_t$, which is the number of customers waiting to be processed at cash registers 2. Controller 32 calculates predicted influx number $R_{t+j}$, which is the number of customers who are expected to go to cash registers 2 after a predetermined time, based on the obtained store-visitor number information and the obtained influx number information. Controller 32 calculates predicted waiting customer number $D_{t+j}$, which is the number of customers who are expected to wait to be processed at cash registers 2 after a predetermined time, for each of the operating unit numbers of cash registers 2 based on the obtained waiting customer number information, the calculated predicted influx number $R_{t+j}$, and processing capability information indicating processable quantity Pa that can be processed by one cash register 2 per unit time, which is stored in storage unit 33. Controller 32 calculates optimum operating unit number N of cash registers 2 based on predicted waiting customer number $D_{t+j}$ calculated and cost information about operating cost C of a cash register stored in the storage unit. This method achieves relief of the congestion of cash registers 2 and keeps a small operating unit number of cash registers 2. It is thus possible to meet both customer satisfaction and satisfaction of store 200.

The program according to the exemplary embodiment causes a computer to perform the operating unit number determination method described above.

As described above, in operating unit number determination device 3, obtaining unit 532 obtains store-visitor number information indicating store-visitor number Et, which is the number of customers who visited store 200, waiting customer number information indicating waiting customer number $D_t$, which is the number of customers waiting to be processed at a plurality of cash registers 2 installed in store 200, and influx number information indicating influx number $R_t$, which is the number of customers added to the customers waiting to be processed at cash registers 2. Influx number prediction unit 32d calculates predicted influx number $R_{t+j}$, which is a number of customers who are expected to go to cash registers 2 and to be added to the customers waiting to be processed at cash registers 2 after predetermined time (j) from current time (t), based on the store-visitor number information and the influx number information. Storage unit 33 stores processing capability information indicating a processable quantity than can be processed by each of cash registers 2 per a certain time and cost information about an operating cost of each of cash registers 2. Congestion degree prediction unit 32e calculates values of predicted waiting customer number $D_{t+j}$, which is the number of customers who are expected to wait to be processed at cash registers 2 after predetermined time (j) from current time point (t), based on the waiting customer number information, predicted influx number $R_{t+j}$, and the processing capability information, with each value corresponding to each of operating unit numbers of n cash registers 2. Operating unit number determination unit 32f calculates an operating unit number (optimum operating unit number N) of cash registers 2 based on predicted waiting customer number $D_{t+j}$ and the cost information.

Transmitter 34 may output operating unit number information indicating calculated operating unit number (optimum operating unit number N).

Operating unit number determination unit 32f may calculate operating unit number of cash registers 2 based on predicted waiting customer number $D_{t+j}$, the cost information, and a difference $\Delta n$ among operating unit numbers of cash registers 2.

Obtaining unit 532 may further obtain processing quantity information indicating processing quantity $P_t$ processed by cash registers 2. In this case, influx number prediction unit 32d calculates an influx number based on the waiting customer number information and the processing quantity information to obtain influx number information.

Obtaining unit 532 may measure a store-visitor number based on images of entrance 200A of store 200 and then measure a waiting customer number based on images of cash registers 2.

Influx number prediction unit 32d may add weight $W^3$?h at current time point (t) to the store-visitor number and the influx number, thus calculating predicted influx number $D_{t+j}$.

Operating unit number determining system 100 includes operating unit number determination device 3, first monitoring camera 1a that outputs images obtained by capturing entrance 200A of store 200, a plurality of cash registers 2 including cash registers 2 installed in store 200, and second monitoring camera 1b that outputs images obtained by capturing cash registers 2. Operating unit number determination device 3 uses images obtained from first monitoring camera 1a and second monitoring camera 1b to calculate an operating unit number of cash registers 2 described above among cash registers 2.

An operating unit number (optimum operating unit number N) of cash registers 2 is determined by the following operating unit number determination method. Computer 3C is prepared. Computer 3C stores processing capability information indicating a processable quantity than can be processed by each of cash registers 2 per a certain time and cost information about an operating cost of each of cash registers 2. Computer 3C obtains store-visitor number information indicating store-visitor number Et, which is the number of customers who visited store 200, waiting customer number information indicating waiting customer number $D_t$, which is the number of customers waiting to be processed at cash registers 2 installed in store 200, and influx number information indicating influx number $R_t$, which is the number of customers added to the customers waiting to be processed at cash registers 2. Computer 3C calculates predicted influx number $R_{t+j}$, which is the number of customers who are expected to be added to the customers waiting to be processed at cash registers 2 after predetermined time (j) from current time (t), based on the store-visitor information and the influx number information. Computer 3C calculates values of predicted waiting customer number $D_{t+j}$, which is the number of customers who are expected to wait to be processed at cash registers 2 after predetermined time (j) from current time point (t), based on the waiting customer number information and the processing capability information, with each value corresponding to each of operating unit numbers n of cash registers 2. Computer 3C calculates an operating unit number (optimum operating unit number N) of cash registers 2 based on the cost information about the operating cost of each of cash registers 2 and predicted waiting customer number $D_{t+j}$.

(Other Exemplary Embodiments)

The exemplary embodiment has been described above as an illustration of the technique disclosed in the present application. However, the technique in the present disclosure is not limited to the exemplary embodiment, and can also be applied to exemplary embodiments in which changes, replacements, additions, omissions, or the like are made as appropriate. Additionally, constituent elements described in the above exemplary embodiment can be combined to configure a new exemplary embodiment.

The constituent components illustrated in the attached drawings and described in the detailed description may include, for the illustration of the above-described technique, not only constituent components essential for the solution to the problem, but also constituent components not essential for the solution to the problem. Thus, it should not be deemed that, merely based on the fact that the constituent components that are not essential have been illustrated in the attached drawings and described in the detailed description, the constituent components that are not essential are essential.

Further, since the aforementioned exemplary embodiment illustrates the technique of the present disclosure, various changes, replacements, additions, omissions, and the like can be made in the claims and their equivalents.

INDUSTRIAL APPLICABILITY

The present disclosure is applicable to an operating unit number determination device that predicts a degree of congestion to calculate an operation unit number of cash registers and an operating unit number determining system including the operating unit number determination device.

REFERENCE MARKS IN THE DRAWINGS

| | |
|---|---|
| 1a | monitoring camera |
| 1b | monitoring camera |
| 2 | cash register |
| 3 | operating unit number determination device |
| 11 | imaging unit |
| 12 | transmitter |
| 21 | payment information obtaining unit |
| 22 | transmitter |
| 31 | receiver |
| 32 | controller |
| 32a | store-visitor number measurement unit |
| 32b | waiting customer number measurement unit |
| 32c | processing quantity obtaining unit |
| 32d | influx number prediction unit |
| 32e | congestion degree prediction unit |
| 32f | operating unit number determination unit |
| 33 | storage unit |
| 33a | processing capability storage unit |
| 33b | operating cost storage unit |
| 34 | transmitter |
| 100 | operating unit number determining system |

## Claims

1. An operating unit number determination device comprising:

   an obtaining unit that obtains store-visitor number information indicating a store-visitor number, which is a number of customers who visited a store, waiting customer number information indicating a waiting customer number, which is a number of customers waiting to be processed at a plurality of cash registers installed in the store, and influx number information indicating an influx number, which is a number of customers added to the waiting customer number;
   an influx number prediction unit that calculates a predicted influx number, which is a number of customers who are expected to be added to the waiting customer number at the plurality of cash registers after a predetermined time from a current time point, based on the store-visitor number information and the influx number information;
   a storage unit that stores processing capability information indicating a processable quantity that can be processed by each of the plurality of cash registers per a certain time and cost information about an operating cost of each of the plurality of cash registers;
   a congestion degree prediction unit that calculates a plurality of values of a predicted waiting customer number, which is a number of customers who are expected to wait to be processed at the plurality of cash registers after the predetermined time, based on the waiting customer number information, the predicted influx number, and the processing capability information, where each of the plurality of values corresponds to each of a plurality of operating unit numbers of the plurality of cash registers; and
   an operating unit number determination unit that calculates an operating unit number of the plurality of cash registers based on the predicted waiting customer number and the cost information.

2. The operating unit number determination device according to claim 1, further comprising a transmitter that outputs operating unit number information indicating the operating unit number calculated.

3. The operating unit number determination device according to claim 1 or 2, wherein the operating unit number determination unit calculates the operating unit number of the plurality of cash registers based on the cost information, a difference among the plurality of operating unit numbers of the plurality of cash registers, and the plurality of values of the predicted waiting customer number.

**4.** The operating unit number determination device according to any one of claims 1 to 3, wherein
the obtaining unit further obtains processing quantity information indicating a processing quantity processed by the plurality of cash registers, and
the influx number prediction unit calculates the influx number based on the waiting customer number information and the processing quantity information to obtain the influx number information.

**5.** The operating unit number determination device according to any one of claims 1 to 4, wherein the obtaining unit measures the store-visitor number based on an image of an entrance of the store and then measures the waiting customer number based on an image of the plurality of cash registers.

**6.** The operating unit number determination device according to any one of claims 1 to 5, wherein the influx number prediction unit adds a weight at the current time point to the store-visitor number and the influx number to calculate the predicted influx number.

**7.** An operating unit number determining system comprising:

the operating unit number determination device according to any one of claims 1 to 5;
a first monitoring camera that outputs an image of an entrance of the store;
the plurality of cash registers installed in the store; and
a second monitoring camera that outputs an image obtained by capturing the plurality of cash registers,
wherein the operating unit number determination device uses the images obtained from the first monitoring camera and the second monitoring camera to calculate the operating unit number of the plurality of cash registers.

**8.** An operating unit number determining system comprising:

the operating unit number determination device according to claim 6;
a first monitoring camera that outputs the image of an entrance of the store;
the plurality of cash registers installed in the store; and
a second monitoring camera that outputs the image of the plurality of cash registers.

**9.** An operating unit number determination method for determining an operating unit number of a plurality of cash registers, the operating unit number determination method comprising:

preparing a computer that stores processing capability information indicating a processable quantity that can be processed by each of the plurality of cash registers per a certain time and cost information about an operating cost of each of the plurality of cash registers;
causing the computer to obtain store-visitor number information indicating a store-visitor number, which is a number of customers who visited a store, waiting customer number information indicating a waiting customer number, which is a number of customers waiting to be processed at the plurality of cash registers installed in the store, and influx number information indicating an influx number, which is a number of customers added to the waiting customer number;
causing the computer to calculate a predicted influx number, which is a number of customers who are expected to be added to the waiting customer number at the plurality of cash registers after a predetermined time from a current time point, based on the store-visitor information and the influx number information;
causing the computer to calculate a plurality of values of a predicted waiting customer number, which is a number of customers who are expected to wait to be processed at the plurality of cash registers after the predetermined time, based on the waiting customer number information, the predicted influx number, and the processing capability information, where each of the plurality of values corresponds to each of a plurality of operating unit numbers of the plurality of cash registers; and
causing the computer to calculate an operating unit number of the plurality of cash registers based on the predicted waiting customer number and the cost information.

**10.** A program that causes the computer to perform the operating unit number determination method according to claim 9.

FIG. 1

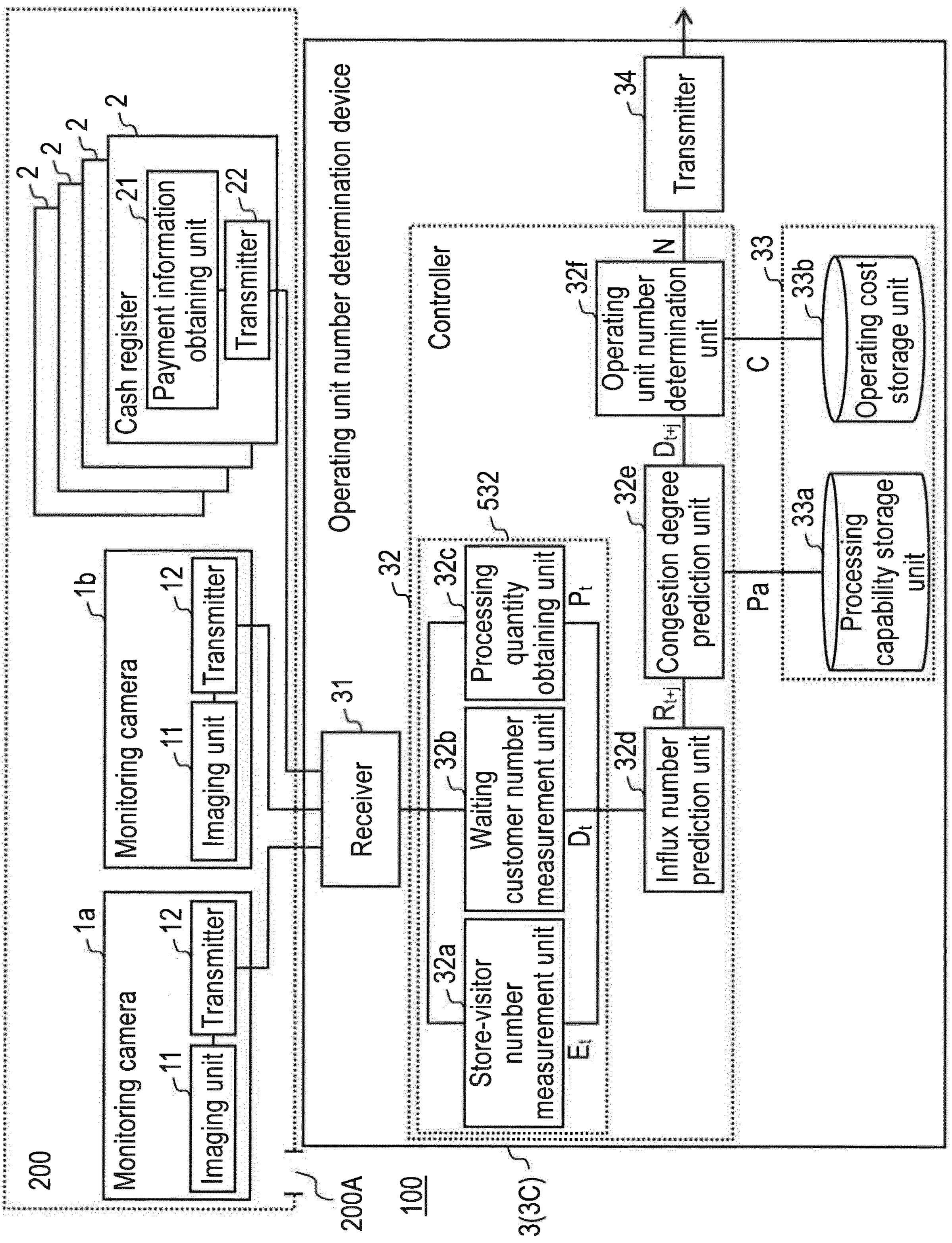
200
Monitoring camera
1a
11
Imaging unit
12
Transmitter
Monitoring camera
1b
11
Imaging unit
12
Transmitter
2
Cash register
21
Payment information obtaining unit
22
Transmitter
200A
100
3(3C)
Operating unit number determination device
31
Receiver
32
Controller
532
32a
Store-visitor number measurement unit
32b
Waiting customer number measurement unit
32c
Processing quantity obtaining unit
Et
Dt
Pt
32d
Influx number prediction unit
Rt+j
32e
Congestion degree prediction unit
Dt+j
32f
Operating unit number determination unit
N
34
Transmitter
Pa
C
33
33a
Processing capability storage unit
33b
Operating cost storage unit

FIG. 2

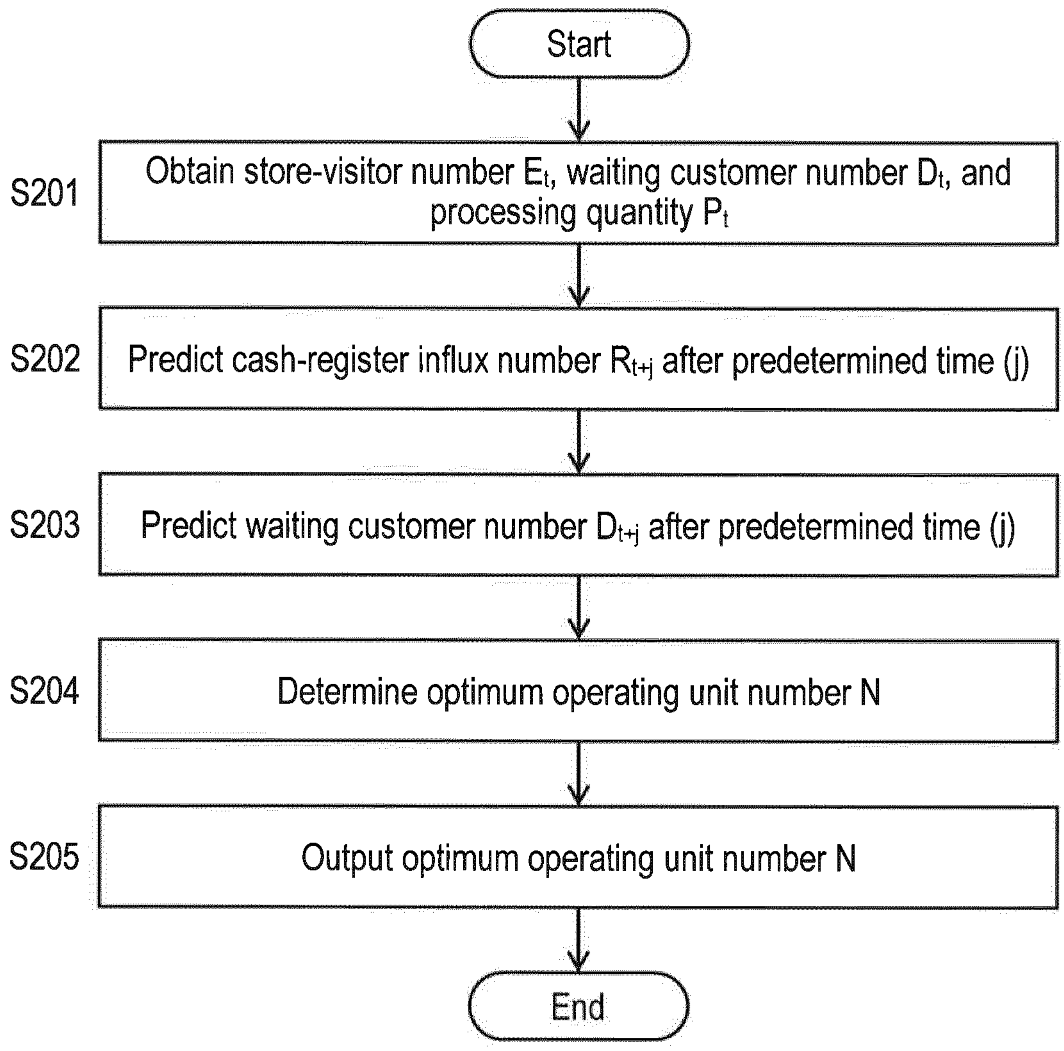
Start
S201
Obtain store-visitor number $E_t$, waiting customer number $D_t$, and processing quantity $P_t$
S202
Predict cash-register influx number $R_{t+j}$ after predetermined time (j)
S203
Predict waiting customer number $D_{t+j}$ after predetermined time (j)
S204
Determine optimum operating unit number N
S205
Output optimum operating unit number N
End

FIG. 3

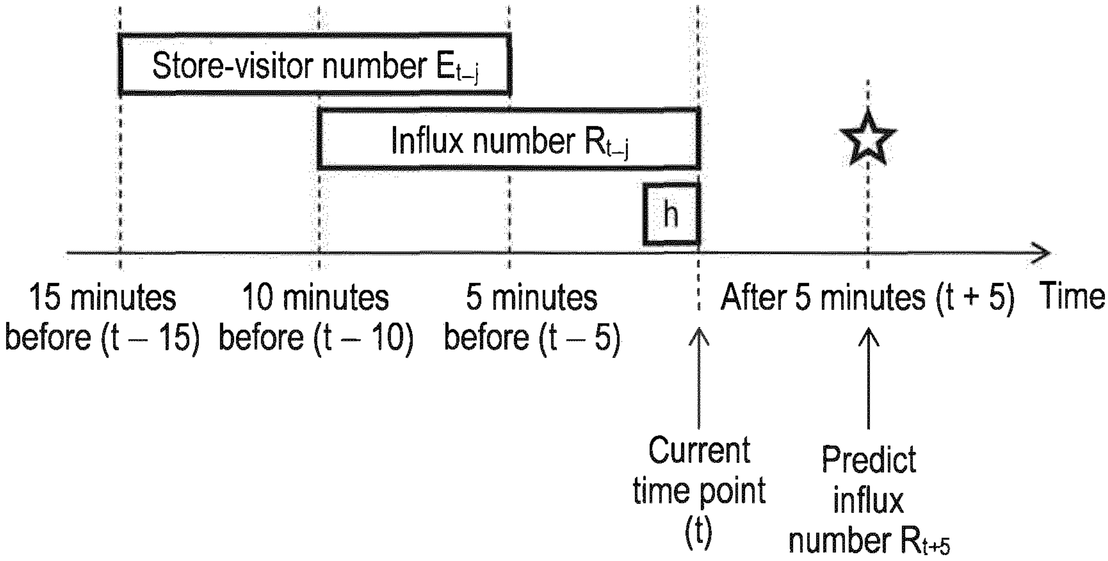


FIG. 4

(Example when waiting customer number at current time point $D_t = 5$, cash register processable quantity $P_a$ = 1 customer/min.·number of cash registers, and predicted influx number $R_{t+j}$ = 3 customers/min.)

| Operating unit number n of cash registers | Degree of congestion (waiting customer number $D_{t+j}$ after predetermined time (j)) | | | | | |
|---|---|---|---|---|---|---|
| | After 0 minute (j=0) | After 1 minute (j=1) | After 2 minutes (j=2) | After 3 minutes (j=3) | After 4 minutes (j=4) | After 5 minutes (j=5) |
| 1 | 5 | 7 | 9 | 11 | 13 | 15 |
| 2 | 2.5 | 3 | 3.5 | 4 | 4.5 | 5 |
| 3 | 1.67 | 1.67 | 1.67 | 1.67 | 1.67 | 1.67 |
| 4 | 1.25 | 1 | 0.75 | 0.5 | 0.25 | 0.00 |

FIG. 5

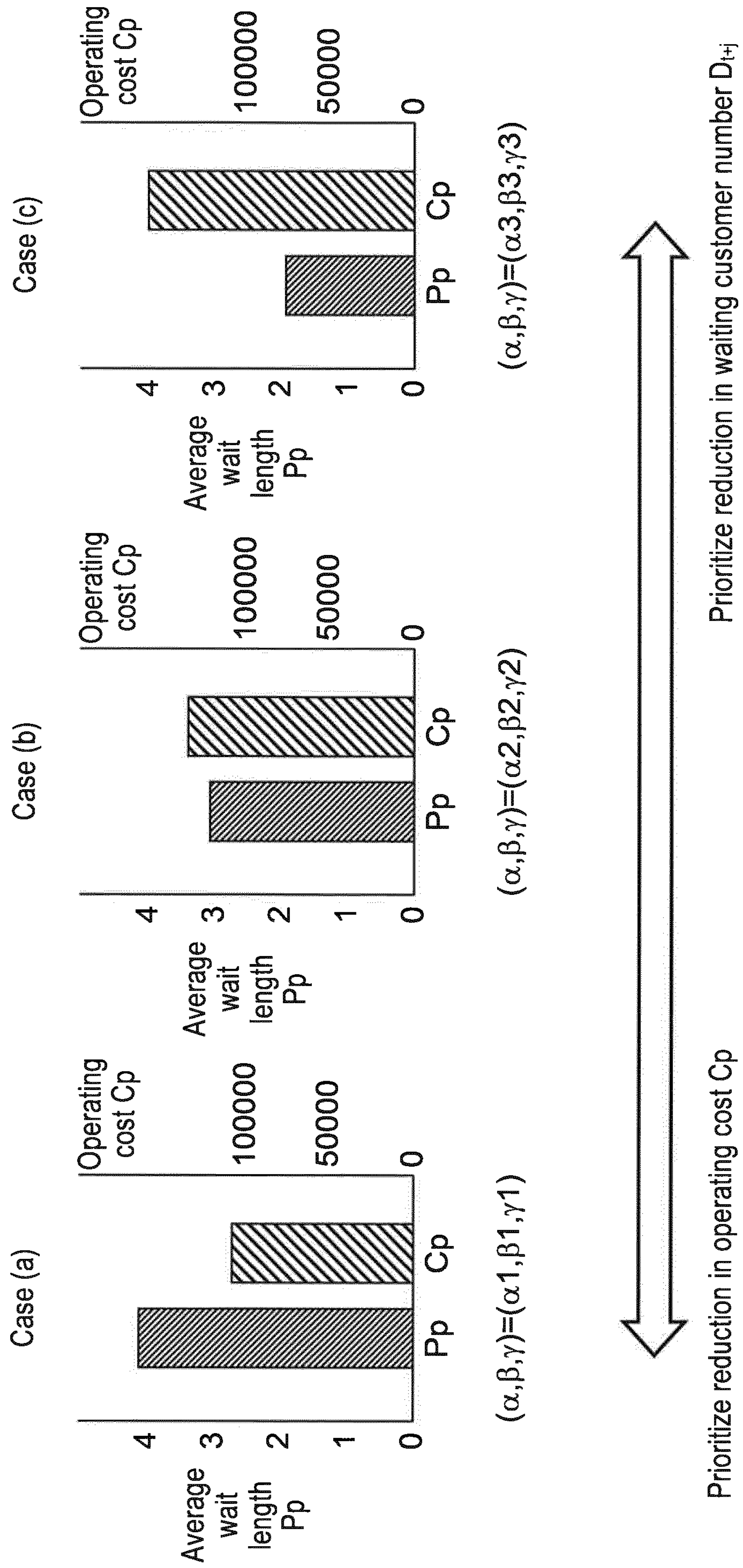
Case (a)
Average wait length Pp
4
3
2
1
0
Pp
Cp
Operating cost Cp
100000
50000
0
(α,β,γ)=(α1,β1,γ1)
Case (b)
Average wait length Pp
4
3
2
1
0
Pp
Cp
Operating cost Cp
100000
50000
0
(α,β,γ)=(α2,β2,γ2)
Case (c)
Average wait length Pp
4
3
2
1
0
Pp
Cp
Operating cost Cp
100000
50000
0
(α,β,γ)=(α3,β3,γ3)
Prioritize reduction in operating cost Cp
Prioritize reduction in waiting customer number D(t+j)

# FIG. 6

Example when operating unit number of cash registers at current time point n = 2, $\alpha = 8$, $\beta = 0.1$, and $\gamma = 4$

| Operating unit number n of cash registers [cash registers] | Waiting customer number $D_{t+5}$ after 5 minutes [customers] | Operating cost Cp [yen] | Change amount $\Delta n$ of operating unit number [cash registers] | Sum value S (penalty) |
|---|---|---|---|---|
| 1 | 15 | 100 | 1 | 134 |
| 2 | 5 | 200 | 0 | 60 |
| 3 | 1.67 | 300 | 1 | 47.3 |
| 4 | 0.00 | 400 | 2 | 48 |

Select operating unit number n with minimum sum value S as optimum operating unit number N

## INTERNATIONAL SEARCH REPORT

International application No.
PCT/JP2016/004132

A. CLASSIFICATION OF SUBJECT MATTER
*G06Q30/06*(2012.01)i, *G06Q10/06*(2012.01)i

According to International Patent Classification (IPC) or to both national classification and IPC

B. FIELDS SEARCHED

Minimum documentation searched (classification system followed by classification symbols)
G06Q30/06, G06Q10/06

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2014-154036 A (Toshiba Tec Corp.), 25 August 2014 (25.08.2014), paragraphs [0040] to [0045] (Family: none) | 1-10 |
| A | JP 2000-132747 A (Fujitsu Ltd.), 12 May 2000 (12.05.2000), paragraphs [0003] to [0008], [0042] to [0045] & WO 2000/025282 A1 | 1-10 |
| A | JP 2006-221367 A (Takachiho Koheki Co., Ltd.), 24 August 2006 (24.08.2006), paragraphs [0035] to [0055] (Family: none) | 1-10 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 25 October 2016 (25.10.16) | 01 November 2016 (01.11.16) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2008544379 W